Europäisches Patentamt

European Patent Office

Office européen des brevets

(11) Publication number: **0 094 460**
**A1**

(12) **EUROPEAN PATENT APPLICATION**

(21) Application number: **82302541.6**

(22) Date of filing: **19.05.82**

(51) Int. Cl.³: **G 09 C 1/00**

(43) Date of publication of application:
**23.11.83 Bulletin 83/47**

(84) Designated Contracting States:
**AT BE CH DE FR GB IT LI LU NL SE**

(71) Applicant: **Iglesias, Rafael Abad**
**Ferrer del Rio, No.15**
**Madrid-28(ES)**

(71) Applicant: **Portoles, Germán Ray**
**Fernandez Shaw 2,**
**Madrid-7(ES)**

(72) Inventor: **Iglesias, Rafael Abad**
**Ferrer del Rio, No.15**
**Madrid-28(ES)**

(72) Inventor: **Portoles, Germán Ray**
**Fernandez Shaw 2,**
**Madrid-7(ES)**

(74) Representative: **Harrison, Gordon Donald et al,**
**FORRESTER & BOEHMERT Widenmayerstrasse 4/1**
**D-8000 München 22(DE)**

(54) **Recording information.**

(57) A book of sheets for use in recording information in coded form comprises sheets of differing lengths arranged in overlapping relation so that marginal parts (15) of successive sheets (10-14) are visible when the book is closed, the parts of such sheets obscured by overlapping sheets each carrying a key for the coded information on the respective sheet.

EP 0 094 460 A1

0094460

Title: "Recording Information"

This invention relates to a procedure for recording a number of items of information and transferring that information in a coded form to a sheet of paper or some other medium from which the information can be read only by use of the appropriate code.

The procedure is useful for the collection of data which is to be transferred to a computer or other machine. The procedure can also be used in cases where the information is to be transferred to a sheet of paper or other medium from which the encoded information can be read by a person. The procedure is useful in the recording of the clinical histories of medical patients, in the recording of information and the drafting of reports by Lawyers and in other cases where it is desired to maintain the recorded information secret.

In a procedure in accordance with the invention for recording a number of items of information, there is used a book of sheets, each sheet underlying another sheet being longer than that other sheet so that the underlying sheet is only partly exposed when said other sheet lies against the underlying sheet, wherein each item of information is encoded in accordance with a respective key provided on a part of a respective one of the sheets, which part is exposed only when the book is open at that sheet, the encoded item of information is recorded either on said one sheet or on the adjacent sheet which is exposed when the book is open at said one sheet and at a position such that, when the book is closed, the encoded information is still exposed and the encoded information is read from the closed book and transferred to another sheet or to another medium.

Reading and transfer of the encoded information may be carried out photographically, for example the closed book may be photocopied. Alternatively, reading and transfer may be carried out by a person reading the encoded information from the closed book and operating a keyboard to transfer the information to another medium. It is also within the scope of the invention for the encoded information which appears on the book to be in a machine-readable form so that reading and transfer of the information to another medium can be carried out by a machine.

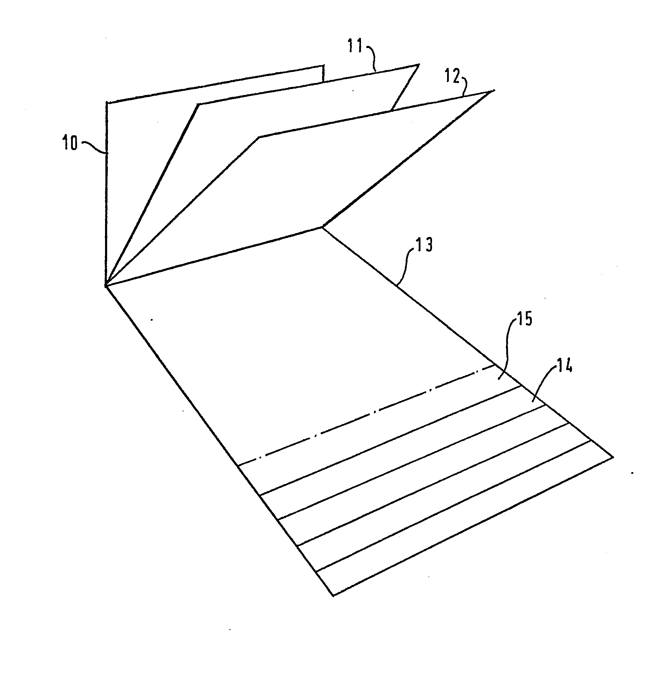

An example of a procedure in accordance with the invention will be described, with reference to the accompanying drawing, which illustrates a book for use in the procedure.

The book comprises a number of sheets of paper, some of which are identified by the reference numerals 10 to 14 in the drawing. These sheets are connected together along an edge of the book which is typically an uppermost edge. Each sheet has a length different from that of the other sheets, the shortest sheet being at the front of the book and the longest sheet being at the back of the book. When the book is in an attitude for normal use, that is an attitude in which information can be entered on the front of each sheet, each of the sheets which underlies another sheet is longer than that other sheet and the underlying sheet is only partly exposed when the other sheet lies against the underlying sheet.

On parts of the sheets which are exposed only when the book is open, there are printed a number of codes for different items of information. When information is to be recorded in the book, the book is opened at a selected sheet so that the codes for the information concerned are exposed. The codes are read and the encoded information is applied to the sheet, for example written on the sheet, adjacent to the lower edge of the sheet so that the encoded information will be exposed when the book is closed. Further information is encoded by the use of codes printed on other sheets of the book and applied to parts of the sheets which are exposed when the book is closed.

The book is preferably used in such a manner that, when the book is closed, there is exposed only information which is in code. The keys are concealed. As manufactured, the book includes a sheet which is perforated so that a part 15 of the sheet can be detached from the book. On this part, there is entered information which is not required to be transferred from the book to another medium or to another sheet. Such information may include the name and address of a patient or person seeking advice. There is applied to the part 15 and to another part of the book a unique designation, whereby correspondence between the name and address and other information recorded in the book can be established. The unique designation comprises a first two digits which are the last two digits of the current year, then a three-digit ordinal number, followed by one or two random numbers. The use of random numbers ensures that successive books are not identified by successive numbers. Thus, patients interviewed successively do not have successive numbers and there is little risk of records relating to successive patients being identified as such. The part 15 which bears the name and address of the patient is safely stored separately from the remainder of the book.

The arrangement of the encoded information on each sheet is such as to facilitate introduction of the information into a micro-computer. Typically, the encoded information is read from the book by a person who enters the information into a micro-computer by means of a keyboard. For retrieval of the information, the micro-computer has a programme which can retrieve the entire set of information contained in the book but cannot retrieve merely a part of that set of information. For transferring the information to the computer, there may be prepared a photocopy of the closed book, this photocopy bearing all of the encoded information which is required to be entered at the keyboard. The encoded information may be presented as alpha-numeric characters or as either of these kinds of character alone.

CLAIMS:

1. A procedure for recording a number of items of information wherein there is used a book of sheets, each sheet underlying another sheet being longer than that other sheet so that the underlying sheet is only partly exposed when said other sheet lies against the underlying sheet, wherein each item of information is encoded in accordance with a respective key provided on a part of a respective one of the sheets, which part is exposed only when the book is open at that sheet, the encoded item of information is recorded either on said one sheet or on the adjacent sheet which is exposed when the book is open at said one sheet and at a position such that, when the book is closed, the encoded information is still exposed and wherein the encoded information is read from the closed book and transferred to another sheet or to another medium.

2. A procedure according to Claim 1 wherein a unique designation is applied to the book and is also included in the information transferred and wherein a part of the book bearing the designation and bearing information additional to that transferred is separated from and is stored separately from the remainder of the book.

3. A procedure according to Claim 1 wherein a unique designation is applied to two parts of the book, one of said parts bearing the designation and bearing information additional to that transferred is separated from and is stored separately from the remainder of the book.

4. A procedure according to Claim 2 or Claim 3 wherein the unique designation includes a character selected randomly from a predetermined group of characters.

5.   A procedure according to any preceding claim wherein the information is transferred to a computer and is retrieved from the computer by means of a programme which can retrieve the entire set of items of information transferred to the computer but not a part of the set.

6.   Any novel feature or novel combination of features disclosed herein or in the accompanying drawing.

# 0094460

EUROPEAN SEARCH REPORT

**European Patent Office**

Application number

EP 82 30 2541

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 09 C 1/00 |
| X | US-A-3 837 106 (D.E.LOFSTROM et al.)<br>*Figures 1-11; column 2, line 20 - column 6, line 2* | 1 | |
| | --- | | |
| A | FR-A-1 585 862 (P.VAN DER VEECKEN)<br>*Figures 1,2; claims* | 1 | |
| | --- | | |
| A | US-A-2 216 633 (B.STEINBERG)<br>*Figures 1-3; claim* | 1 | |
| | --- | | |
| A | GB-A-1 363 841 (R.G.McCAFFREY et al.)<br>*Figures 1-2; claims* | 1 | |
| | --- | | |
| A | IBM TECHNICAL DISCLOSURE BULLETIN, vol. 7, no. 5, October 1964, pages 395-396, New York (USA);<br>C.H.BUTTON et al.: "Variable format keypunching form device" *The whole article* | 1 | **TECHNICAL FIELDS SEARCHED (Int. Cl. ³)**<br><br>G 09 C<br>G 06 K<br>B 42 D |
| | --- | | |
| A | GB-A-1 322 967 (SUMITOMO ELECTRIC INDUSTRIES)<br>*Figure 3; page 2, lines 52-63* | 1 | |
| | ----- | | |

The present search report has been drawn up for all claims

| Place of search<br>THE HAGUE | Date of completion of the search<br>27-12-1982 | Examiner<br>CARDON A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82